# EUROPÄISCHE PATENTSCHRIFT

(11) **EP 3 530 339 B1**
(45) Veröffentlichungstag und Bekanntmachung des Hinweises auf die Patenterteilung: **06.04.2022**
(21) Anmeldenummer: 19158276.6
(22) Anmeldetag: 20.02.2019
(51) Int. Cl.: B01D 46/24, F01N 3/021, F01N 3/022, F01N 3/20

(54) **PARTIKELFILTER FÜR EINEN VERBRENNUNGSMOTOR SOWIE VERFAHREN ZUR HERSTELLUNG EINES SOLCHEN PARTIKELFILTERS**
PARTICLE FILTER FOR A COMBUSTION ENGINE AND METHOD FOR PRODUCING SAME
FILTRE À PARTICULES POUR UN MOTEUR À COMBUSTION INTERNE AINSI QUE PROCÉDÉ DE FABRICATION D'UN TEL FILTRE À PARTICULES

(30) Priorität: 23.02.2018 DE 102018104140
(43) Veröffentlichungstag der Anmeldung: 28.08.2019
(73) Patentinhaber: VOLKSWAGEN AKTIENGESELLSCHAFT, 38440 Wolfsburg (DE)
(72) Erfinder: Car, Onur Ulas, 10115 Berlin (DE); Paulovsky, Markus, 38448 Wolfsburg (DE)
(74) Vertreter: Gulde & Partner

(56) Entgegenhaltungen:
- EP-A1- 1 541 215
- EP-A1- 1 974 791
- EP-A1- 1 997 556
- EP-A1- 2 065 576
- EP-A2- 1 580 181
- EP-A2- 2 910 291
- US-A1- 2006 191 248
- US-A1- 2008 120 968

## Beschreibung

Die Erfindung betrifft einen Partikelfilter zur Anordnung in einer Abgasanlage eines Verbrennungsmotors, insbesondere eines fremdgezündeten Verbrennungsmotors nach dem Ottoprinzip, sowie ein Verfahren zur Herstellung eines solchen Partikelfilters.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen vor allem nach einem Kaltstart des Verbrennungsmotors aufgrund einer unvollständigen Verdampfung der Kraftstofftröpfchen auch in Kombination mit einem unterstöchiometrischen Verbrennungsluftverhältnis nach dem Kaltstart, kalter Zylinderwände sowie der heterogenen Gemischverteilung in den Brennräumen des Verbrennungsmotors. Die Kaltstartphase ist somit maßgeblich für die Einhaltung der gesetzlich vorgeschriebenen Partikelgrenzwerte, sowohl bezüglich der Partikelmasse als auch hinsichtlich der Partikelanzahl. Zudem führt ein Kaltstart mit einem unterstöchiometrischen, fetten Verbrennungsluftverhältnis zu höheren Emissionen an Kohlenstoffmonoxid (CO) und unverbrannten Kohlenwasserstoffen (HC), da eine Konvertierung in Kohlenstoffdioxid (CO₂) und Wasserdampf aufgrund des kalten Katalysators noch nicht möglich ist. Im Fahrbetrieb von Kraftfahrzeugen mit einem Ottopartikelfilter wird dieser dann weiter mit Ruß beladen. Damit der Abgasgegendruck nicht zu stark ansteigt, muss der Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Hierzu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann. Bei aktuell bekannten Abgasfiltersubstraten für Partikelfilter wird eine Filterwand des Partikelfilters vom Abgas des Verbrennungsmotors durchströmt.

Aus der DE 603 17 056 T2 ist ein Partikelfilter mit einer Vielzahl von parallel verlaufenden Filterkanälen bekannt, wobei die Filterkanäle entweder einlass- oder auslassseitig durch einen Stopfen verschlossen sind, wobei die auslassseitigen Stopfen in einem porösen Material ausgeführt sind, um den Abgasgegendruck des Partikelfilters zu reduzieren.

Die EP 1 251 247 A1 offenbart einen Partikelfilter für einen Verbrennungsmotor mit einer Vielzahl von parallel verlaufenden Filterkanälen, wobei die Filterkanäle entweder einlass- oder auslassseitig durch einen Stopfen verschlossen sind, wobei die Porosität der Filterwände zwischen den Filterkanälen deutlich höher als die Porosität der Stopfen ist.

Darüber hinaus ist aus der EP 1 312 776 A2 ein Dieselpartikelfilter bekannt, wobei an diesem Filterkanäle ausgebildet sind, welche entweder einlass- oder auslassseitig mit einem Stopfen verschlossen sind. Um im Falle einer Regeneration einen unkontrollierten Abbrand von Ruß zu vermeiden, sind einige der Filterkanäle sowohl einlass- als auch auslassseitig mit einem Stopfen verschlossen, sodass diese Filterkanäle nicht vom Abgas durchströmt werden können. Somit entstehen Todkanäle, welche die mit Ruß beladenen Filterkanäle voneinander trennen und im Falle einer Regeneration ein unkontrolliertes Überschlagen von einer Rußabbrandzone auf weitere, mit Ruß beladene Filterkanäle vermeiden.

Aus der EP 1 541 215 A1 sind ein Partikelfilter und ein Verfahren zur Herstellung eines solchen Partikelfilters bekannt. Dabei sind die Verschlüsse der Filterkanäle derart angeordnet, dass sich von einem Schachbrettmuster abweichende Muster ergeben, um die Gefahr einer thermischen Schädigung des Partikelfilters zu reduzieren. Die EP 1 974 791 A1 offenbart ebenfalls einen Partikelfilter mit einem solchen Muster.

Aus der EP 2 910 291 A2 ist ein Partikelfilter bekannt, bei dem die einlassseitigen Filterkanäle mit einem undurchlässigen Stopfen auf der Auslassseite verschlossen sind und die auslassseitigen Filterkanäle mit einem undurchlässigen oder porösen Stopfen auf der Einlassseite verschlossen sind.

Die EP 1 997 556 A1 offenbart einen Partikelfilter mit Einlasskanälen und Auslasskanälen, wobei die Einlass- und die Auslasskanäle durch eine poröse Filterwand voneinander getrennt sind. Dabei sind unterschiedliche Einlasskanäle mit unterschiedlich langen Verschlussstopfen verschlossen. Die Länge der Verschlussstopfen zum einlassseitigen Verschluss der Auslasskanäle ist ebenfalls zwischen den einzelnen Auslasskanälen unterschiedlich.

Die EP 1 580 181 A2 offenbart einen Partikelfilter für einen Verbrennungsmotor, wobei der Partikelfilter in radialer Richtung in zwei unterschiedliche Zonen unterteilt ist, welche eine unterschiedliche Durchlässigkeit aufweisen. Dabei ist die Gasdurchlässigkeit in der Kernzone höher als die Gasdurchlässigkeit in der Randzone.

Aus der EP 2 065 576 A1 ist ein Partikelfilter für die Abgasnachbehandlung eines Verbrennungsmotors bekannt, bei dem die Rußbeladung über den gesamten Querschnitt vergleichmäßigt wird und die spezifische Wärmekapazität des Partikelfilters in einem inneren Bereich des Partikelfilters erhöht wird.

Die US 2008/120968 A1 offenbart ein Abgasnachbehandlungssystem für einen Dieselmotor mit einem motornahen ersten Partikelfilter und einem stromabwärts des ersten Partikelfilters angeordneten zweiten Partikelfilter. Dabei sind in dem ersten Partikelfilter Durchlasskanäle ausgebildet, welche eine Durchströmung des Partikelfilters ohne einen Durchtritt durch eine poröse Filterwand ermöglichen.

Aus der US 2006/0919248 A1 ist ein keramischer Partikelfilter mit Hitzeschutzelementen bekannt, welcher vergleichsweise dünne Filtrationswände aufweist und trotzdem eine vergleichsweise hohe thermische Festigkeit aufweist, um eine dauerhafte thermische Beschädigung durch einen unkontrollierten starken Rußabbrand zu vermeiden.

Der Erfindung liegt nun die Aufgabe zugrunde, die Filtereffizienz bei einem fabrikneuen Partikelfilter zu verbessern und die aus dem Stand der Technik bekannten Nachteile, insbesondere eine zu niedrige Partikelabscheidung bei einem fabrikneuen Partikelfilter, zu überwinden.

Erfindungsgemäß wird diese Aufgabe durch einen Partikelfilter zur Abgasnachbehandlung eines Verbrennungsmotors gelöst, wobei der Partikelfilter ein Gehäuse aufweist, in welchem ein Filterkörper angeordnet ist, wobei in dem Filterkörper eine Vielzahl von ersten Filterkanälen ausgebildet ist, welche jeweils auslassseitig durch einen porösen Verschluss verschlossen sind. Ferner sind in dem Filterkörper eine Vielzahl von zweiten Filterkanälen ausgebildet, welche jeweils einlassseitig durch einen undurchlässigen Verschluss verschlossen sind. Dabei sind die ersten Filterkanäle und die zweiten Filterkanäle jeweils durch eine durchlässige Filterwand voneinander getrennt, wobei ein Abgas des Verbrennungsmotors im Betrieb in die ersten Filterkanäle des Partikelfilters eintritt, durch die Filterwände durchtritt und durch die zweiten Filterkanäle austritt. Erfindungsgemäß ist dabei vorgesehen, dass zumindest einige der zweiten Filterkanäle auslassseitig durch einen hochporösen Verschluss verschlossen sind. Unter einem hochporösen Verschluss ist in diesem Zusammenhang ein Verschluss zu verstehen, welcher eine Filterwirkung bezüglich des Abgases des Verbrennungsmotors aufweist, jedoch nur zu einer geringfügigen Erhöhung des Abgasgegendrucks im Partikelfilter führt und ansonsten das Abgas des Verbrennungsmotors passieren lässt. Dabei wird die verbesserte Filterwirkung durch das mehrfache Durchströmen des Abgases durch ein poröses Material erzielt. Im Betrieb lagern sich dann sowohl an den Filterwänden als auch an den hochporösen Verschlüssen Rußpartikel ab, welche im weiteren Betrieb die Porengröße reduzieren und somit die Filterwirkung erhöhen.

Durch die in den abhängigen Ansprüchen aufgeführten Merkmale sind weitere Verbesserungen des im unabhängigen Anspruch angegebenen Partikelfilters möglich.

In bevorzugter Ausgestaltung des Partikelfilters ist vorgesehen, dass eine Mehrzahl von zweiten Filterkanälen auslassseitig durch einen hochporösen Verschluss verschlossen sind.

Besonders bevorzugt ist dabei, wenn sämtliche zweiten Filterkanäle auslassseitig jeweils durch einen hochporösen Verschluss verschlossen sind.

Gemäß einer bevorzugten Ausführungsform des Partikelfilters ist vorgesehen, dass die Filterkanäle als Waben oder Röhren ausgebildet sind. Durch eine wabenförmige Struktur ist eine besonders kompakte und raumsparende Anordnung der Filterkanäle in dem Filterkörper des Partikelfilters möglich. Dabei werden Zwischenräume und/oder Hohlräume zwischen den einzelnen Filterkanälen vermieden, wodurch ein einfacher Durchtritt des Abgases von einem ersten Filterkanal in einen zweiten Filterkanal möglich ist.

Alternativ zu einer wabenförmigen Struktur können die Filterkanäle auch röhrenförmig ausgebildet werden, wobei ebenfalls eine kompakte und raumoptimierte Anordnung der Filterkanäle möglich wird.

In einer vorteilhaften Verbesserung der Erfindung ist vorgesehen, dass der Partikelfilter mit einer katalytisch wirksamen Beschichtung beschichtet ist. Durch eine katalytische Beschichtung kann ggf. ein zusätzlicher Drei-Wege-Katalysator entfallen, wodurch der Montageaufwand und die Kosten für das Abgasnachbehandlungssystem reduziert werden können.

Besonders bevorzugt ist dabei, wenn die katalytisch wirksame Beschichtung als eine drei-wege-katalytisch wirksame Beschichtung ausgeführt ist. Ein derart beschichteter Partikelfilter wird auch als Vier-Wege-Katalysator bezeichnet. Durch einen Vier-Wege-Katalysator können ein Drei-Wege-Katalysator und ein Partikelfilter in der Abgasanlage des Verbrennungsmotors ersetzt werden, wodurch eine Komponente zur Abgasnachbehandlung entfallen kann. Bevorzugt ist ein motornaher Vier-Wege-Katalysator, insbesondere als erste Komponente der Abgasnachbehandlung, angeordnet, um ein Aufheizen des Vier-Wege-Katalysators auf eine Regenerationstemperatur zur Oxidation des darin zurückgehaltenen Rußes zu erleichtern.

Alternativ ist mit Vorteil vorgesehen, dass die katalytisch wirksame Beschichtung als Beschichtung zur selektiven katalytischen Reduktion von Stickoxiden (NOx) ausgeführt ist. Insbesondere bei Dieselpartikelfiltern kann es vorteilhaft sein, wenn der Partikelfilter mit einer Beschichtung zur selektiven katalytischen Reduktion von Stickoxiden (SCR-Beschichtung) versehen ist. Somit kann zusätzlich zur Wirkung der Minimierung der Partikelemissionen ein Beitrag zur Reduzierung der NOx-Emissionen geleistet werden.

Erfindungsgemäß ist vorgesehen, dass die hochporösen Verschlüsse eine Porosität von mindestens 40 %, vorzugsweise mindestens 50 %, besonders bevorzugt mindestens 60 %, aufweisen. Die Porosität definiert den Anteil freien Volumens am Gesamtvolumen des porösen Körpers und kann beispielsweise volumetrisch bestimmt werden. Durch eine derartige Porosität kann der Anstieg des Abgasgegendrucks vergleichsweise gering gehalten werden, um negative Sekundäreffekte, wie einen unrunden Motorlauf, erhöhten Verbrauch oder Zündaussetzer zu vermeiden. Gleichzeitig wird durch eine entsprechende Porosität eine zusätzliche Abscheidung von Partikeln ermöglich, wodurch sich insgesamt die Filterwirkung des Partikelfilters erhöht.

In einer bevorzugten Ausführungsform der Erfindung ist vorgesehen, dass die hochporösen Verschlüsse aus einem keramischen Material, insbesondere Cordierit, bestehen. Die Herstellung eines derartiges Verschlusses erfolgt zum Beispiel mittels einer cordierithaltigen pastösen Masse, welche in die Kanäle eingebracht wird und anschließend über Trocknungsprozesse ausgehärtet und fixiert wird. Die Herbeiführung der Porosität in diesem Material erfolgt bspw. über prozesstechnische Schritte wie Mahlgratbeeinflussung der Rohmaterialien sowie kohlenwasserstoff-basierte Zusätze, welche beim Brand der Keramik im Ofen verdampfen und dann das Porengefüge einstellen.

Erfindungsgemäß ist vorgesehen, dass die ersten Filterkanäle auslassseitig durch niedrig poröse Verschlüsse und die zweiten Filterkanäle auslassseitig durch hochporöse Verschlüsse verschlossen sind, wobei das Verhältnis der Durchlässigkeiten zwischen den niedrig porösen Verschlüssen zu den hochporösen Verschlüssen mindestens eins zu fünf beträgt. Ab einem solchen Verhältnis ist sichergestellt, dass ein überwiegender Anteil des Abgasstroms durch die Filterwand zwischen den ersten und den zweiten Filterkanälen durchtritt und somit die Filterwirkung des Partikelfilters gegeben ist. Durch einen auslassseitigen Verschluss der ersten Filterkanäle durch einen niederporösen Verschluss kann die Filterleistung erhöht werden, da mehr poröses Filtrationsvolumen zur Verfügung steht und vom Abgas durchströmt wird.

In einer bevorzugten Ausführungsform des Partikelfilters ist vorgesehen, dass die niedrig porösen Verschlüsse aus einem keramischen Material, insbesondere Cordierit, hergestellt sind. Herbeiführung der Porosität in diesem Material erfolgt beispielsweise über prozesstechnische Schritte wie Mahlgratbeeinflussung der Rohmaterialien sowie kohlenwasserstoff-basierte Zusätze, welche beim Brand der Keramik im Ofen verdampfen und dann das Porengefüge einstellen.

Erfindungsgemäß wird ein Verfahren zur Herstellung eines Partikelfilters nach Anspruch 1 für einen Verbrennungsmotor vorgeschlagen, wobei der Partikelfilter ein Gehäuse aufweist, in welchem ein Filterkörper angeordnet wird, wobei an dem Filterkörper ein Vielzahl von ersten Filterkanälen ausgebildet sind, welche jeweils auslassseitig durch einen undurchlässigen oder durch einen porösen Verschluss verschlossen sind. Der Filterkörper weist ferner eine Vielzahl von zweiten Filterkanälen auf, welche einlassseitig durch einen undurchlässigen Verschluss verschlossen sind. Dabei sind die ersten Filterkanäle und die zweiten Filterkanäle jeweils durch eine gasdurchlässige Filterwand voneinander getrennt. Erfindungsgemäß ist vorgesehen, dass zumindest einige der zweiten Filterkanäle, vorzugsweise eine Mehrzahl der zweiten Filterkanäle, besonders bevorzugt alle zweiten Filterkanäle, auslassseitig durch einen hochporösen Verschluss verschlossen werden. Durch ein solches Verfahren lässt sich ein Partikelfilter herstellen, welcher insbesondere im Neuzustand ein verbessertes Filterverhalten bezüglich der Rußpartikel aufweist. Im Betrieb des Partikelfilters bildet sich an den Filterwänden eine dünne Ruß- beziehungsweise Ascheschicht aus, welche die Poren der Filterwände zumindest teilweise verengt oder verstopft und somit zu einer erhöhten Filterleistung des Partikelfilters führt. Da eine solche Ruß- oder Ascheschicht im Neuzustand noch nicht vorhanden ist, weist ein Partikelfilter im Neuzustand eine geringere Filterleistung als nach einigen Betriebsstunden des Verbrennungsmotors auf, wenn sich die ersten Partikel an dem Rußfilter abgelagert haben. Durch das erfindungsgemäße Verfahren zur Herstellung wird die Filterleistung gerade in den ersten Betriebsstunden des Partikelfilters erhöht und somit die Reinigungsleistung bezüglich der Rußpartikel verbessert.

In einer bevorzugten Ausführungsform des Verfahrens ist vorgesehen, dass die hochporösen Verschlüsse in den Filterkörper eingepresst und/oder eingeklebt werden. Auf diese Art kann fertigungstechnisch einfach und kostengünstig ein Verschluss der Auslassseite der zweiten Filterkanäle erfolgen. Dabei kann der Prozess zum Einbringen der Verschlüsse, insbesondere vom Stopfen zum Verschließen der Filterkanäle, weitestgehend automatisiert erfolgen und somit kostengünstig in eine Serienfertigung des Partikelfilters integriert werden.

Alternativ ist mit Vorteil vorgesehen, dass die hochporösen Verschlüsse stoffschlüssig mit dem Filterkörper verbunden oder an diesem ausgebildet sind.

Erfindungsgemäß wird die Verwendung eines vorgeschlagenen Partikelfilters nach Anspruch 1 in einer Abgasanlage eines Ottomotors vorgeschlagen. Die eingangs genannte Problemstellung ergibt sich insbesondere bei direkteinspritzenden Ottomotoren, da diese im Vergleich zu direkteinspritzenden Dieselmotoren deutlich weniger Ruß produzieren. Dabei entsteht der Ruß insbesondere unmittelbar nach einem Kaltstart des Verbrennungsmotors, wenn die Brennraumwände noch kalt sind und eine Verdampfung des eingespritzten Kraftstoffs erschwert wird. Da ein Ottomotor im Normalbetrieb weniger Partikelmasse produziert als ein Dieselmotor, tritt das eingangs beschriebene Problem der reduzierten Filterwirkung des Partikelfilters im Neuzustand insbesondere bei Ottomotoren auf. Daher ist es insbesondere bei Ottopartikelfiltern förderlich, die zweiten Filterkanäle mit einem hochporösen Verschluss zu verschließen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei mit den gleichen Bezugsziffern gekennzeichnet. Es zeigen:
- Figur 1: einen Verbrennungsmotor mit einer Abgasanlage, in welcher ein erfindungsgemäßer Partikelfilter angeordnet ist;
- Figur 2: ein Ausführungsbeispiel eines nicht zur Erfindung gehörenden Partikelfilters in einer vereinfachten Schnittdarstellung; und
- Figur 3: ein Ausführungsbeispiel eines erfindungsgemäßen Partikelfilters in einer schematischen Schnittdarstellung.

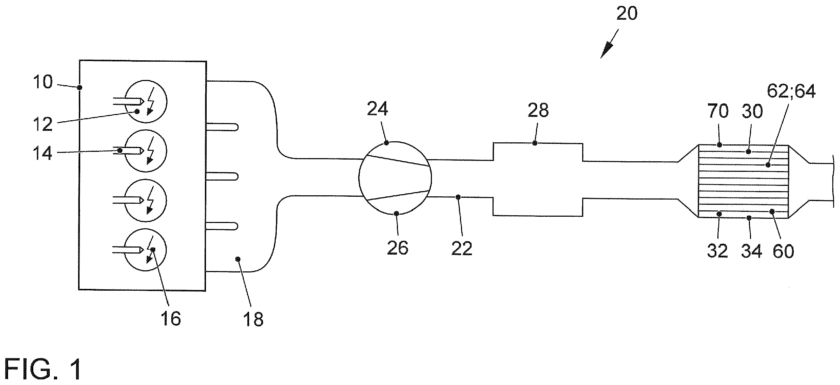

Figur 1 zeigt einen fremdgezündeten Verbrennungsmotor 10 für ein Kraftfahrzeug. Der Verbrennungsmotor 10 ist vorzugsweise als mittels Zündkerzen 16 fremdgezündeter Ottomotor ausgeführt. Der Verbrennungsmotor 10 weist mindestens einen Brennraum 12, vorzugsweise wie in Figur 1 dargestellt eine Mehrzahl von Brennräumen 12, auf, in welchem/n Kraftstoff mittels eines Kraftstoffinjektors 14 eingespritzt werden kann. Der Verbrennungsmotor 10 ist mit seinem Auslass 18 mit einer Abgasanlage 20 verbunden. Die Abgasanlage 20 umfasst einen Abgaskanal 22, in welchem in Strömungsrichtung eines Abgases durch den Abgaskanal 22 stromabwärts des Auslasses 18 eine Turbine 26 eines Abgasturboladers 24 angeordnet ist. Stromabwärts der Turbine 26 sind im Abgaskanal 22 ein Drei-Wege-Katalysator 28 und weiter stromabwärts ein Partikelfilter 30, insbesondere ein Ottopartikelfilter 70, angeordnet.

Alternativ kann der Partikelfilter 30 auch als erste Komponente der Abgasnachbehandlung stromabwärts der Turbine 26 angeordnet sein und ist in diesem Ausführungsbeispiel vorzugsweise mit einer katalytischen Beschichtung 62, insbesondere mit einer drei-wege-katalytisch wirksamen Beschichtung 64 als sogenannter Vier-Wege-Katalysator 32 ausgeführt. Bei einem Dieselmotor ist die Beschichtung katalytisch wirksame Beschichtung 62 des Partikelfilters 30 vorzugsweise als Beschichtung 66 zur selektiven katalytischen Reduktion von Stickoxiden (SCR-Beschichtung) ausgeführt.

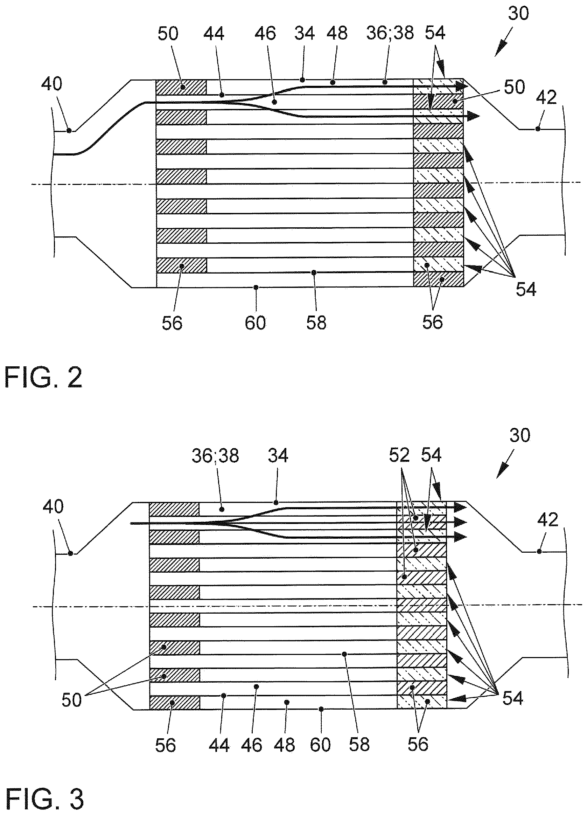

Ein nicht zur Erfindung gehörender Partikelfilter 30 für eine solche Abgasanlage 20 ist in Figur 2 dargestellt. Der Partikelfilter 30 weist ein Gehäuse 34 auf, welches an einer in Strömungsrichtung des Abgases vorderen Stirnseite einen Einlass 40 und an der gegenüberliegenden Stirnseite einen Auslass 42 aufweist. In dem Gehäuse 34 des Partikelfilters 30 ist ein Filterkörper 60 angeordnet, in welchem eine Vielzahl von im Wesentlichen parallel verlaufenden Filterkanälen 46, 48 ausgebildet sind. Die Filterkanäle 46, 48 lassen sich in erste Filterkanäle 46 und zweite Filterkanäle 48 unterteilen. Die ersten Filterkanäle 46 sind auslassseitig durch einen gasundurchlässigen Verschluss 50 verschlossen, während die zweiten Filterkanäle 48 einlassseitig durch einen gasundurchlässigen Verschluss 50, insbesondere einen Stopfen 56, und auslassseitig durch eine hochporösen Verschluss 54 verschlossen sind. Die ersten Filterkanäle 46 und die zweiten Filterkanäle 48 sind jeweils wabenförmig ausgebildet, wobei jeweils ein erster Filterkanal 46 und ein zweiter Filterkanal 48 benachbart angeordnet und durch eine gasdurchlässige Filterwand 44 voneinander getrennt sind. Alternativ zu einer wabenförmigen Ausbildung der Filterkanäle 46, 48 sind röhrenförmige Filterkanäle 46, 48 vorgesehen, welche ebenfalls eine kompakte Bauweise des Filterkörpers 60 ermöglichen.

Im Betrieb des Partikelfilters 30 strömt das Abgas des Verbrennungsmotors 10 durch den Abgaskanal 22 und durch den Einlass 40 in den Partikelfilter 30. Dabei strömt das Abgas durch die ersten Filterkanäle 46 in den Filterkörper 60, tritt von dort durch die Filterwand 44 und strömt durch den zweiten Filterkanal 48 zum Auslass 42 des Partikelfilters 30. Dabei lagern sich Rußpartikel an der Filterwand 44 ab. Durch die Ablagerung der Partikel und durch eine bei der Regeneration des Partikelfilters 30 aus den Rußpartikeln entstehende Asche kommt es an den Filterwänden 44 zu einer Ablagerungsschicht 58, welche die Filterwirkung des Partikelfilters 30 erhöht.

In Figur 3 ist ein Ausführungsbeispiel eines erfindungsgemäßen Partikelfilters 30 dargestellt. Der Partikelfilter 30 weist ein Gehäuse 34 auf, welches an einer in Strömungsrichtung des Abgases vorderen Stirnseite einen Einlass 40 und an der gegenüberliegenden Stirnseite einen Auslass 42 aufweist. In dem Gehäuse 34 des Partikelfilters 30 ist ein Filterkörper 60 angeordnet, in welchem eine Vielzahl von im Wesentlichen parallel verlaufenden Filterkanälen 46, 48 ausgebildet sind. Die Filterkanäle 46, 48 lassen sich in erste Filterkanäle 46 und zweite Filterkanäle 48 unterteilen. Die ersten Filterkanäle 46 sind auslassseitig durch einen niedrig porösen Verschluss 50, insbesondere einen Stopfen 56, verschlossen, während die zweiten Filterkanäle 48 einlassseitig durch einen gasundurchlässigen Verschluss 50, insbesondere einen Stopfen 56, und auslassseitig durch eine hochporösen Verschluss 54 verschlossen sind. Die ersten Filterkanäle 46 und die zweiten Filterkanäle 48 sind jeweils wabenförmig oder röhrenförmig ausgebildet, wobei jeweils ein erster Filterkanal 46 und ein zweiter Filterkanal 48 benachbart angeordnet und durch eine gasdurchlässige Filterwand 44 voneinander getrennt sind. Durch den niedrig porösen Verschluss der ersten Filterkanäle kann ein geringer Anteil des Abgasstroms den Filterkörper 60 durchströmen, ohne eine Filterwand 44 zu durchströmen. Dies kann den Abgasgegendruck des Partikelfilters 30 und die damit bekannten Nachteile, insbesondere einen erhöhten Verbrauch und/oder einen unruhigen Motorlauf des Verbrennungsmotors 10 zumindest teilweise kompensieren. Der Hauptabgasstrom tritt auch in diesem Ausführungsbeispiel durch die Filterwand 44 von der ersten Gruppe Filterkanäle 46 in die zweiten Filterkanäle 48 aus. Dabei ist vorgesehen, dass die Porosität der hochporösen auslassseitigen Verschlüsse 54 der zweiten Filterkanäle 46 mindestens fünfmal so hoch wie die Porosität der niedrig porösen Verschlüsse 52 der ersten Filterkanäle 46 ausgebildet ist. Dadurch wird erreicht, dass der Strömungswiderstand von den ersten Filterkanälen 46 durch die Filterwand 44 und durch die auslassseitigen hochporösen Verschlüsse 54 niedriger ist als der Strömungswiderstand durch die ersten Filterkanäle 46 und die auslassseitigen niedrig porösen Verschlüsse 52, sodass der Hauptabgasstrom, vorzugsweise mindestens 80 % des Abgasvolumens, besonders bevorzugt mindestens 90 % des Abgasvolumens, durch die Filterwände 44 des Partikelfilters 30 strömen kann und sich die im Abgas des Verbrennungsmotors 10 enthaltenen Rußpartikel an diese Filterwänden 44 ablagern. Durch einen erfindungsgemäßen Partikelfilter 30 kann die Partikelanzahl sowie die Partikelkonzentration eines direkteinspritzenden Ottomotors signifikant verringert werden, wodurch die Umwelt entlastet wird.

### Bezugszeichenliste

- 10: Verbrennungsmotor
- 12: Brennraum
- 14: Kraftstoffinjektor
- 16: Zündkerze
- 18: Auslass

- 20: Abgasanlage
- 22: Abgaskanal
- 24: Abgasturbolader
- 26: Turbine
- 28: Drei-Wege-Katalysator

- 30: Partikelfilter
- 32: Vier-Wege-Katalysator
- 34: Gehäuse
- 36: Waben
- 38: Röhren

- 40: Einlass
- 42: Auslass
- 44: Filterwand
- 46: erster Filterkanal
- 48: zweiter Filterkanal

- 50: undurchlässiger Verschluss
- 52: niedrig poröser Verschluss
- 54: hochporöser Verschluss
- 56: Stopfen
- 58: Ablagerungsschicht

- 60: Filterkörper
- 62: katalytische Beschichtung
- 64: drei-wege-katalytisch wirksame Beschichtung
- 66: Beschichtung zur selektiven katalytischen Reduktion von Stickoxiden
- 68: Dieselpartikelfilter

- 70: Ottopartikelfilter

- P_{K}: Partikelkonzentration
- P_{N}: Partikelanzahl

## Patentansprüche

1. Partikelfilter (30) zur Abgasnachbehandlung eines Verbrennungsmotors (10), wobei der Partikelfilter (30) ein Gehäuse (34) aufweist, in welchem ein Filterkörper (60) angeordnet ist, wobei in dem Filterkörper (60) eine Vielzahl von ersten Filterkanälen (46) ausgebildet ist, welche jeweils auslassseitig durch einen porösen Verschluss (52) verschlossen sind, wobei in dem Filterkörper (60) eine Vielzahl von zweiten Filterkanälen (48) ausgebildet ist, welche jeweils einlassseitig durch einen undurchlässigen Verschluss (50) verschlossen sind, und wobei die ersten Filterkanäle (46) und die zweiten Filterkanäle (48) jeweils durch eine Filterwand (44) voneinander getrennt sind, **dadurch gekennzeichnet, dass** die ersten Filterkanäle (46) auslassseitig durch niedrigporöse Verschlüsse (52) und die zweiten Filterkanäle (48) auslassseitig durch hochporöse Verschlüsse (54) verschlossen sind, wobei das Verhältnis der Durchlässigkeit zwischen den niedrigporösen Verschlüssen (52) zu den hochporösen Verschlüssen (54) mindestens eins zu fünf beträgt und die hochporösen Verschlüsse (54) eine Porosität von mindestens 40% aufweisen.

2. Partikelfilter (30) nach Anspruch 1, **dadurch gekennzeichnet, dass** eine Mehrzahl der zweiten Filterkanäle (46) auslassseitig durch einen hochporösen Verschluss (54) verschlossen sind.

3. Partikelfilter (30) nach Anspruch 1, **dadurch gekennzeichnet, dass** sämtliche zweiten Filterkanäle (46) jeweils durch einen hochporösen Verschluss (54) verschlossen sind.

4. Partikelfilter (30) nach einem der Ansprüche 1 bis 3, **dadurch gekennzeichnet, dass** die Filterkanäle (46, 48) als Waben (36) oder als Röhren (38) ausgebildet sind.

5. Partikelfilter (30) nach einem der Ansprüche 1 bis 4, **dadurch gekennzeichnet, dass** der Partikelfilter (30) mit einer katalytisch wirksamen Beschichtung (62) beschichtet ist.

6. Partikelfilter (30) nach Anspruch 5, **dadurch gekennzeichnet, dass** die katalytisch wirksame Beschichtung (62) eine drei-wege-katalytisch wirksame Beschichtung (64) und der Partikelfilter (30) als sogenannter Vier-Wege-Katalysator (32) ausgeführt ist.

7. Partikelfilter (30) nach Anspruch 5, **dadurch gekennzeichnet, dass** die katalytisch wirksame Beschichtung (62) als Beschichtung zur selektiven katalytischen Reduktion von Stickoxiden (66) ausgeführt ist.

8. Partikelfilter (30) nach einem der Ansprüche 1 bis 7, **dadurch gekennzeichnet, dass** die hochporösen Verschlüsse (54) aus einem keramischen Material bestehen.

9. Partikelfilter (30) nach einem der Ansprüche 1 bis 8, **dadurch gekennzeichnet, dass** die niedrig porösen Verschlüsse (52) aus einem keramischen Material hergestellt sind.

10. Verfahren zur Herstellung eines Partikelfilters (30) für einen Verbrennungsmotor (10), wobei der Partikelfilter (30) ein Gehäuse (34) aufweist, in welchem ein Filterkörper (60) angeordnet wird, wobei in dem Filterkörper (60) eine Vielzahl von ersten Filterkanälen (46) ausgebildet ist, welche jeweils auslassseitig durch einen porösen Verschluss (52) verschlossen sind, wobei in dem Filterkörper (60) eine Vielzahl von zweiten Filterkanälen (48) ausgebildet ist, welche jeweils einlassseitig durch einen undurchlässigen Verschluss (50) verschlossen sind, und wobei die ersten Filterkanäle (46) und die zweiten Filterkanäle (48) jeweils durch eine Filterwand (44) voneinander getrennt sind, **dadurch gekennzeichnet, dass** die ersten Filterkanäle (46) auslassseitig durch niedrigporöse Verschlüsse (52) und die zweiten Filterkanäle (48) auslassseitig durch hochporöse Verschlüsse (54) verschlossen werden, wobei das Verhältnis der Durchlässigkeit zwischen den niedrigporösen Verschlüssen (52) zu den hochporösen Verschlüssen (54) mindestens eins zu fünf beträgt und die hochporösen Verschlüsse (54) eine Porosität von mindestens 40% aufweisen.

11. Verfahren zur Herstellung eines Partikelfilters (30) nach Anspruch 10, **dadurch gekennzeichnet, dass** die hochporösen Verschlüsse (54) in den Filterkörper (60) eingepresst und/oder eingeklebt werden.

12. Verfahren zur Herstellung eines Partikelfilters (30) nach Anspruch 10, **dadurch gekennzeichnet, dass** die hochporösen Verschlüsse (54) stoffschlüssig mit dem Filterkörper (60) verbunden oder an diesem ausgebildet sind.

13. Verwendung eines Partikelfilters nach einem der Ansprüche 1 bis 9 in einer Abgasanlage eines Ottomotors.

## Claims

1. Particle filter (30) for the after-treatment of exhaust gas of an internal combustion engine (10), the particle filter (30) having a housing (34) in which a filter body (60) is arranged, a plurality of first filter channels (46) being formed in the filter body (60), each of which is closed at an outlet end by a porous closure (52), a plurality of second filter channels (48) being formed in the filter body (60), each of which is closed at an inlet end by an impermeable closure (50), and the first filter channels (46) and the second filter channels (48) each being separated from one another by a filter wall (44), **characterized in that** the first filter channels (46) are closed at the outlet end by low-porosity closures (52) and the second filter channels (48) are closed at the outlet end by high-porosity closures (54), the ratio of the permeability between the low-porosity closures (52) and the high-porosity closures (54) being at least one to five, and the high-porosity closures (54) having a porosity of at least 40%.

2. Particle filter (30) according to Claim 1, **characterized in that** a number of the second filter channels (46) are closed at the outlet end by a high-porosity closure (54).

3. Particle filter (30) according to Claim 1, **characterized in that** all the second filter channels (46) are in each case closed by a high-porosity closure (54).

4. Particle filter (30) according to any one of Claims 1 to 3, **characterized in that** the filter channels (46, 48) are formed as a honeycomb (36) or as tubes (38).

5. Particle filter (30) according to any one of Claims 1 to 4, **characterized in that** the particle filter (30) is coated with a catalytically active coating (62).

6. Particle filter (30) according to Claim 5, **characterized in that** the catalytically active coating (62) is a three-way catalytically active coating (64), and the particle filter (30) is designed as a so-called four-way catalytic converter (32).

7. Particle filter (30) according to Claim 5, **characterized in that** the catalytically active coating (62) is designed as a coating for the selective catalytic reduction of nitrogen oxides (66).

8. Particle filter (30) according to any one of Claims 1 to 7, **characterized in that** the high-porosity closures (54) consist of a ceramic material.

9. Particle filter (30) according to any one of Claims 1 to 8, **characterized in that** the low-porosity closures (52) are made of a ceramic material.

10. Method for producing a particle filter (30) for an internal combustion engine (10), the particle filter (30) having a housing (34) in which a filter body (60) is arranged, a plurality of first filter channels (46) being formed in the filter body (60), each of which is closed at the outlet end by a porous closure (52), a plurality of second filter channels (48) being formed in the filter body (60), each of which is closed at the inlet end by an impermeable closure (50), and the first filter channels (46) and the second filter channels (48) each being separated from one another by a filter wall (44), **characterized in that** the first filter channels (46) are closed at the outlet end by low-porosity closures (52) and the second filter channels (48) are closed at the outlet end by high-porosity closures (54), the ratio of the permeability between the low-porosity closures (52) and the high-porosity closures (54) being at least one to five, and the high-porosity seals (54) having a porosity of at least 40%.

11. Method for producing a particle filter (30) according to Claim 10, **characterized in that** the high-porosity closures (54) are pressed and/or glued into the filter body (60).

12. Method for producing a particle filter (30) according to Claim 10, **characterized in that** the high-porosity closures (54) are integrally formed with or bonded on the filter body (60).

13. Use of a particle filter according to any one of Claims 1 to 9 in an exhaust system of a gasoline engine.

## Revendications

1. Filtre à particules (30) destiné au post-traitement des gaz d'échappement d'un moteur à combustion interne (10), le filtre à particules (30) comportant un boîtier (34), dans lequel est disposé un corps de filtre (60), une pluralité de premiers canaux filtrants (46) étant réalisée dans le corps de filtre (60), lesquels sont fermés respectivement côté sortie par un organe de fermeture poreux (52), une pluralité de seconds canaux filtrants (48) étant réalisée dans le corps de filtre (60), lesquels sont fermés respectivement côté entrée par un organe de fermeture imperméable (50), et les premiers canaux filtrants (46) et les seconds canaux filtrants (48) étant séparés les uns des autres respectivement par une paroi filtrante (44), **caractérisé en ce que** les premiers canaux filtrants (46) sont fermés côté sortie par des organes de fermeture à faible porosité (52) et les seconds canaux filtrants (48) sont fermés côté sortie par des organes de fermeture à porosité élevée (54), le rapport de perméabilité entre les organes de fermeture à faible porosité (52) et les organes de fermeture à porosité élevée (54) étant d'au moins un pour cinq et les organes de fermeture à porosité élevée (54) présentant une porosité d'au moins 40 %.

2. Filtre à particules (30) selon la revendication 1, **caractérisé en ce qu'**une multitude des seconds canaux filtrants (46) est fermée côté sortie par un organe de fermeture à porosité élevée (54).

3. Filtre à particules (30) selon la revendication 1, **caractérisé en ce que** tous les seconds canaux filtrants (46) sont fermés respectivement par un organe de fermeture à porosité élevée (54).

4. Filtre à particules (30) selon l'une quelconque des revendications 1 à 3, **caractérisé en ce que** les canaux filtrants (46, 48) sont réalisés sous la forme d'alvéoles (36) ou de tubes (38).

5. Filtre à particules (30) selon l'une quelconque des revendications 1 à 4, **caractérisé en ce que** le filtre à particules (30) est revêtu d'un revêtement à effet catalytique (62).

6. Filtre à particules (30) selon la revendication 5, **caractérisé en ce que** le revêtement à effet catalytique (62) est un revêtement à effet catalytique à trois voies (64) et le filtre à particules (30) est réalisé sous la forme d'un catalyseur dit à quatre voies (32).

7. Filtre à particules (30) selon la revendication 5, **caractérisé en ce que** le revêtement à effet catalytique (62) est réalisé sous la forme d'un revêtement pour la réduction catalytique sélective des oxydes d'azote (66).

8. Filtre à particules (30) selon l'une quelconque des revendications 1 à 7, **caractérisé en ce que** les organes de fermeture à porosité élevée (54) sont constitués d'un matériau céramique.

9. Filtre à particules (30) selon l'une quelconque des revendications 1 à 8, **caractérisé en ce que** les organes de fermeture à faible porosité (52) sont fabriqués en un matériau céramique.

10. Procédé de fabrication d'un filtre à particules (30) pour un moteur à combustion interne (10), le filtre à particules (30) comportant un boîtier (34), dans lequel est disposé un corps de filtre (60), une pluralité de premiers canaux filtrants (46) étant réalisée dans le corps de filtre (60), lesquels sont fermés respectivement côté sortie par un organe de fermeture poreux (52), une pluralité de seconds canaux filtrants (48) étant réalisée dans le corps de filtre (60), lesquels sont fermés respectivement côté entrée par un organe de fermeture imperméable (50), et les premiers canaux filtrants (46) et les seconds canaux filtrants (48) étant séparés les uns des autres respectivement par une paroi filtrante (44), **caractérisé en ce que** les premiers canaux filtrants (46) sont fermés côté sortie par des organes de fermeture à faible porosité (52) et les seconds canaux filtrants (48) sont fermés côté sortie par des organes de fermeture à porosité élevée (54), le rapport de perméabilité entre les organes de fermeture à faible porosité (52) et les organes de fermeture à porosité élevée (54) étant d'au moins un pour cinq et les organes de fermeture à porosité élevée (54) présentant une porosité d'au moins 40 %.

11. Procédé de fabrication d'un filtre à particules (30) selon la revendication 10, **caractérisé en ce que** les organes de fermeture à porosité élevée (54) sont pressés et/ou collés dans le corps de filtre (60).

12. Procédé de fabrication d'un filtre à particules (30) selon la revendication 10, **caractérisé en ce que** les organes de fermeture à porosité élevée (54) sont reliés au corps de filtre (60) par liaison de matière ou formés sur celui-ci.

13. Utilisation d'un filtre à particules selon l'une quelconque des revendications 1 à 9 dans un système d'échappement d'un moteur à allumage par étincelles.
